# FASCICULE DE BREVET EUROPEEN

(11) **EP 3 242 111 B1**
(45) Date de publication et mention de la délivrance du brevet: **05.12.2018**
(21) Numéro de dépôt: 17169067.0
(22) Date de dépôt: 02.05.2017
(51) Int. Cl.: G01D 5/244

(54) **PROCEDE DE CORRECTION D'UNE MESURE D ANGLE D'UN ROTOR DANS UNE MACHINE ELECTRIQUE**
KORREKTURVERFAHREN EINER WINKELMESSUNG EINES ROTORS IN EINER ELEKTRISCHEN MASCHINE
METHOD FOR CORRECTING A ROTOR ANGLE MEASUREMENT IN AN ELECTRIC MACHINE

(30) Priorité: 03.05.2016 FR 1653979
(43) Date de publication de la demande: 08.11.2017
(73) Titulaire: Renault s.a.s, 92100 Boulogne-Billancourt (FR)
(72) Inventeur: MERIENNE, Ludovic, 91190 Gif sur yvette (FR); MALOUM, Abdelmalek, 94550 Chevilly la rue (FR); NEGRE, Edouard, 78180 Montigny le Bretonneux (FR)

(56) Documents cités:
- WO-A1-2014/075698
- DE-A1- 4 320 834
- DE-A1- 10 335 862
- DE-A1-102011 089 547
- US-A1- 2009 030 638

## Description

La présente invention se rapporte à un procédé de correction d'une mesure d'angle d'un rotor dans une machine électrique.

Dans le domaine de l'électrotechnique, il est bien connu que pour contrôler le couple d'une machine électrique, il est nécessaire de connaitre l'angle à un instant donné du rotor dans la machine électrique.

A cet effet, il est connu d'utiliser un capteur d'angle monté dans la machine électrique pour connaitre la position du rotor.

En particulier, il est connu d'employer un résolveur, qui comprend un bobinage inducteur excité à haute fréquence, monté sur le rotor de la machine électrique et deux bobinage induits déphasés de 90°, installés fixement par rapport au rotor. Ainsi lorsque le rotor est entrainé en rotation, les bobinages induits reçoivent un flux électromagnétique du bobinage inducteur dont la valeur est fonction du cosinus de l'angle formé par le bobinage inducteur par rapport à l'un des bobinages induits et du sinus de l'angle pour l'autre bobinage induit. Ceci permet alors de déterminer la position du rotor dans la machine par transformation trigonométrique.

Cependant, bien qu'il soit possible de caler précisément le résolveur dans la machine électrique de manière à connaitre avec une relative précision une position de référence du rotor, la mesure des autres valeurs d'angle lors d'une révolution du rotor est généralement imprécise.

Une telle imprécision est souvent la conséquence des variations mécaniques liées à la production des machines électriques. Par exemple, lors de la fabrication d'une machine électrique, il peut arriver que les bobinages induits ne soient pas parfaitement déphasés de 90°, que le centrage du rotor par rapport au stator ne soit pas parfait, que l'axe du rotor soit vrillé ou encore qu'il existe un effet de voile dans le cas des capteurs de position à flux axial dit « thumbling effect ».

Tous ces défauts, dont la liste n'est pas exhaustive, ont pour effet d'introduire des harmoniques et donc des erreurs dans la mesure de l'angle du rotor par le résolveur.

Il existe donc le besoin d'une solution pour corriger les valeurs d'angle mesurées par les capteurs d'angle de machine électrique, en particulier lorsque le capteur est un résolveur.

Une solution divulguée par le document WO2013136612 consiste à corriger les erreurs de mesure d'un résolveur en injectant un biais dans les signaux des bobinages induits. Cependant, ce biais étant prédéterminé, il ne peut corriger qu'un seul type d'erreur, et ce de manière identique pour chaque unité de machine électrique fabriquée. Aussi, une telle solution ne permet pas de corriger des erreurs de mesure liées aux différences propres de chaque machine fabriquée.

Le document DE10335862 divulgue un procédé de correction de mesure d'angle d'un codeur incrémental pour un moteur d'imprimante commandé en position, visant à éliminer les variations dans la largeur des encoches du codeur.

Le document DE102011089547 divulgue un procédé de correction d'une valeur mesurée d'un angle de rotation du rotor d'une machine électrique dans lequel on mesure la valeur d'un signal de capteur représentatif d'un angle de rotation du rotor et on détermine une valeur de correction à partir d'une table de correction déterminée à l'avance.

Le document US2009030638 divulgue un procédé d'étalonnage d'un encodeur rotatif comportant une étape de décélération d'une vitesse prédéterminée à une autre et une étape d'analyse des distances angulaires entre deux échantillonnages sur un tour d'encodeur.

Le document WO2014075698 divulgue un procédé d'étalonnage d'un encodeur rotatif dans lequel on détermine une fréquence vibratoire dans le profil angulaire de l'encodeur à une vitesse prédéterminée.

Le document DE4320834 divulgue un procédé de mesure du couple sur un arbre rotatif utilisant une pluralité de transducteurs.

Il existe donc un besoin pour une solution permettant de corriger de manière plus fiable les valeurs d'angle mesurées par les capteurs de machine électrique, en particulier lorsque le capteur est un résolveur.

On propose un procédé de correction d'une mesure d'angle d'un rotor dans une machine électrique, obtenue par un capteur d'angle installé dans ladite machine électrique, dans lequel au cours d'une étape d'étalonnage du capteur d'angle, le rotor est entrainé en rotation dans la machine électrique jusqu'à atteindre une vitesse prédéterminée, puis décélère librement dans la machine électrique, et en ce que pour chaque révolution du rotor lors de ladite décélération libre :
- on acquiert une pluralité de valeurs d'angle mesuré par ledit capteur d'angle pour une pluralité d'instants au cours de ladite révolution,
- on détermine une valeur représentative de la vitesse moyenne du rotor au cours de ladite révolution, en fonction de la durée de ladite révolution,
- on détermine une séquence de valeurs de vitesse instantanée pour chaque instant de ladite pluralité d'instants au cours de ladite révolution, en fonction de ladite valeur représentative de la vitesse moyenne du rotor et d'une estimation de la décélération du rotor au cours de cette révolution,
- on détermine une séquence de valeurs d'angle estimé du rotor pour ladite pluralité d'instants au cours de ladite révolution en fonction de ladite séquence de valeurs de vitesse instantanée,
- on détermine une cartographie fournissant des valeurs de correction d'angle en fonction d'un angle mesuré par ledit capteur, lesdites valeurs de correction d'angle correspondant à la différence entre les valeurs d'angle mesuré et les valeurs d'angle estimé pour un même instant de ladite pluralité d'instants,
ladite cartographie permettant de corriger une valeur d'angle mesurée par ledit capteur d'angle lors du fonctionnement de la machine électrique.

Ainsi, on peut établir une cartographie permettant de fournir une valeur de correction d'angle pour chaque angle mesuré par le résolveur, ou par tout capteur d'angle installé sur la machine électrique. La cartographie peut ainsi être créée lors d'une étape d'étalonnage, par exemple lors de l'installation de la machine, et tient compte des particularités de chaque machine étalonnée. Ceci permet d'obtenir une correction des angles mesurés particulièrement fiable.

En outre, le procédé de correction selon l'invention ne nécessitant aucun matériel particulier autre que le résolveur pour mesurer les angles et un organe apte à mettre en oeuvre le procédé, la correction peut être effectuée de manière relativement peu coûteuse.

Avantageusement et de manière non limitative, on met en oeuvre une étape préalable d'installation du capteur d'angle, aussi connue sous le nom d'étape de calage, au cours de laquelle on positionne le capteur d'angle de manière à pouvoir détecter précisément l'angle zéro du rotor dans la machine électrique, de sorte que le temps mis par le rotor pour réaliser une révolution correspond au temps écoulé entre deux passages consécutifs du rotor par l'angle zéro. Ainsi, la correction peut être encore plus fiable, car l'étape de calage permet de s'assurer que la détection de chaque révolution du rotor est précise.

Avantageusement et de manière non limitative, ladite estimation de la décélération du rotor est sélectionnée dans une séquence de valeurs de décélération obtenue par dérivation d'une séquence de vitesses moyennes du rotor. Ainsi, on peut estimer la décélération du rotor pour chaque révolution en se basant sur des valeurs obtenues par le capteur d'angle, par exemple le résolveur.

Avantageusement et de manière non limitative, ladite séquence de valeurs de décélération est filtrée par un filtre passe-bas. Ainsi, on peut lisser la séquence de valeurs de décélération, ce qui améliore l'estimation de la décélération pour chaque révolution.

Avantageusement et de manière non limitative, ledit filtre passe-bas est synchronisé sur la fréquence de rotation dudit rotor. Ainsi, on améliore encore l'estimation de la décélération, en faisant varier la fréquence de coupure de manière adaptative par rapport au régime de la machine électrique.

Avantageusement et de manière non limitative, on détermine ladite séquence de valeurs d'angle estimé par intégration de ladite séquence de valeurs de vitesse instantanée. Ainsi, on peut obtenir la séquence de valeurs d'angle estimé de manière fiable et rapide.

Avantageusement et de manière non limitative, on détermine une erreur angulaire correspondant à la différence entre la dernière valeur d'angle estimé de ladite séquence de valeurs d'angle estimé par rapport à un angle de référence ; ladite erreur angulaire et la durée de ladite révolution permettant de déterminer une vitesse de correction apte à affiner une séquence suivante de valeurs de vitesse instantanée. Ainsi, on peut corriger les valeurs de vitesse instantanée d'autres révolutions du rotor de manière à améliorer les corrections de mesure d'angle.

Avantageusement et de manière non limitative, on affine ladite séquence de valeurs de vitesse instantanée par une valeur de vitesse de correction déterminée pour une révolution précédente. Ce qui permet pour cette révolution de corriger les mesures d'angles en tenant compte des erreurs déterminées pour une ou plusieurs révolutions précédentes.

L'invention concerne aussi un organe de correction d'une mesure d'angle d'un rotor dans une machine électrique, adapté pour mettre en oeuvre un procédé tel que décrit précédemment.

L'invention concerne aussi un ensemble de correction d'un capteur d'angle d'une machine électrique caractérisé en ce qu'il comprend une machine électrique sur laquelle est montée un capteur d'angle du rotor, et un organe de correction d'une mesure d'angle tel que décrit précédemment.

Avantageusement et de manière non limitative, ledit capteur d'angle comprend un résolveur.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :

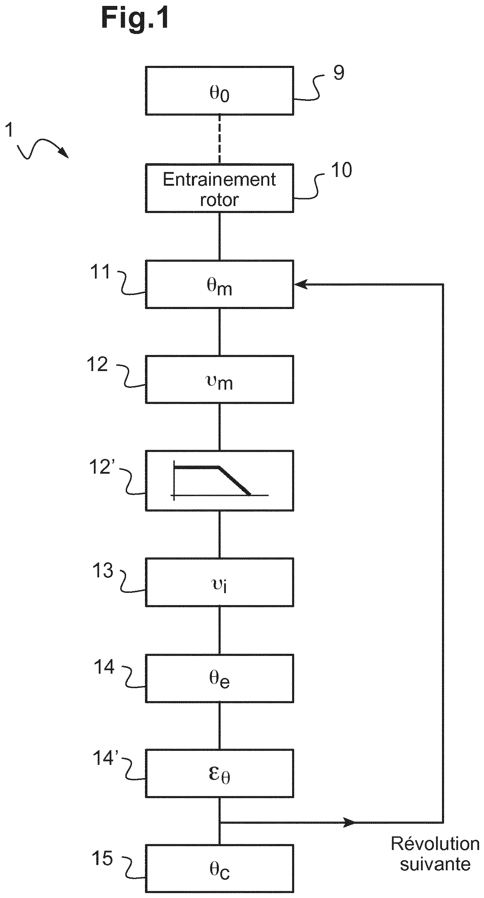

- la figure 1 est un ordinogramme représentant une procédé de correction selon un mode de réalisation de l'invention;
- la figure 2 est un graphique ayant en abscisse le temps et en ordonnée des vitesses de rotation du rotor, et présentant des courbes de la vitesse de rotation réelle du rotor, de la vitesse mesurée par le résolveur et de la vitesse estimée, au cours de l'étape d'étalonnage du procédé de correction selon le mode de réalisation de la figure 1.

Une machine électrique, non représentée, comprend un stator et un rotor installés dans un carter.

Le rotor est entrainé en rotation par un champ électromagnétique généré par les bobinages statoriques.

Pour contrôler le couple de la machine électrique, il est utile de connaitre l'angle du rotor, qui correspond à la position angulaire du rotor par rapport au stator.

A cet effet, on définit un angle de référence θ₀, ici l'angle 0°, du rotor par rapport au stator.

Pour mesurer l'angle du rotor à un instant donné du fonctionnement de la machine électrique, et donc alors que le rotor est en rotation autour de son axe de rotation, un capteur d'angle est installé dans la machine électrique.

Le capteur d'angle est dans ce mode de réalisation un résolveur, mais peut être tout autre capteur d'angle adapté pour une machine électrique, dès lors qu'il est possible de connaitre, par ce capteur, avec une relative précision l'angle de référence θ₀ pour le rotor.

Un résolveur comprend un bobinage inducteur installé sur le rotor et parcouru par un courant électrique, et deux bobinages induits installés au voisinage du stator et subissant des perturbations générées par le champ électromagnétique générés par le bobinage inducteur.

On installe les deux bobinages induits de sorte qu'ils soient perpendiculaires l'un par rapport à l'autre. La variation du courant dans les bobinages induits correspond pour l'un au sinus de l'angle du rotor et pour l'autre au cosinus de l'angle du rotor.

Aussi, dans une étape d'installation 9 du résolveur, couramment appelée étape de calage 9 du résolveur, on dispose le résolveur de manière à ce que lorsque le rotor se trouve dans une position correspondant à l'angle de référence θ₀, dit angle 0°, l'un des bobinages induits présente une tension nulle, soit le sinus de l'angle 0°, alors que la tension aux bornes de l'autre bobinage induit est maximale, ce qui correspond au cosinus de l'angle 0°.

A l'issue de l'étape de calage, il est alors possible de détecter par le résolveur, de manière relativement précise, le passage du rotor par son angle de référence θ₀ par mesure des tensions aux bornes des bobinages induits.

Cependant, les mesures d'angle au cours d'une révolution du rotor sont généralement imprécises car des perturbations s'ajoutent aux variations de champ magnétique du bobinage inducteur sur les bobinages induits.

On entend par le terme de révolution du rotor, un tour complet du rotor. Autrement dit, une révolution du rotor correspond à l'ensemble des positions angulaires prises par le rotor de manière à passer deux fois consécutives à son angle de référence θ₀, ici l'angle 0°.

Lorsque le résolveur est installé, il est possible de déterminer relativement précisément l'achèvement d'une révolution du rotor, et on peut déterminer le temps mis par le rotor pour réaliser une révolution, qui correspond au temps pour atteindre deux fois consécutives l'angle de référence θ₀. De cette manière on peut aussi compter le nombre de révolutions effectuées par le rotor, de sorte que le résolveur peut être employé comme compte-tours.

Afin de corriger les erreurs de mesure du résolveur, on met en oeuvre une étape de d'étalonnage 1 permettant de déterminer une cartographie de valeurs d'angles de correction θ_{c}, pour corriger chaque valeur d'angle mesuré θₘ par le résolveur.

Dans ce cadre, on met en oeuvre une étape d'entrainement 10 en rotation du rotor, jusqu'à une vitesse prédéterminée, par exemple jusqu'à une valeur comprise entre 1000 et 1200 tours/minute.

Lorsque cette vitesse de rotation est atteinte, on cesse l'entrainement, de sorte que le rotor est libre en rotation et qu'il décélère de manière sensiblement constante.

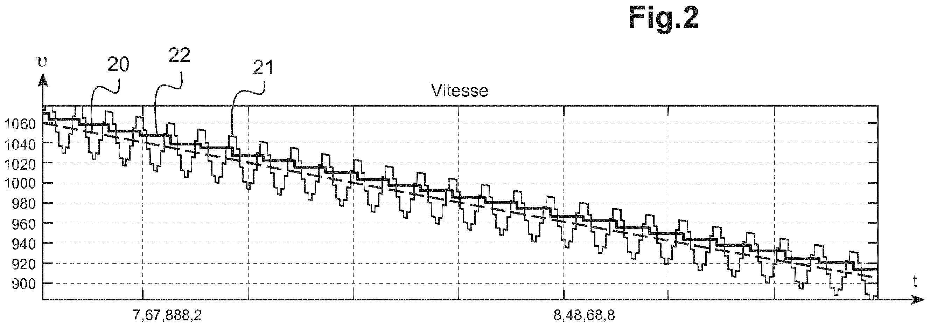

En référence à la figure 2, la courbe 20 représente la variation réelle de la vitesse du rotor lorsque le rotor est en rotation libre au cours de l'étape d'étalonnage. On remarque que la vitesse réelle du rotor décroit de manière régulière. A contrario, la courbe 21, représente la vitesse obtenue par dérivation numérique de la mesure d'angle θₘ obtenue par le résolveur. On remarque que cette vitesse obtenue par les mesures du résolveur présente une oscillation erronée, dont la fréquence est fonction du régime de la machine électrique. Le régime de la machine électrique correspondant à la vitesse de rotation du rotor.

Pour chaque révolution du rotor, au cours de la rotation libre, on acquiert au cours d'une étape 11 une pluralité de valeurs d'angle mesuré θₘ par le résolveur pour une pluralité d'instants t.

Les valeurs d'angle mesuré θₘ sont acquises de manière régulière pendant la durée de la révolution. La fréquence d'acquisition est de préférence très supérieure à la fréquence de la rotation du rotor. En effet, plus la fréquence d'acquisition est élevée, plus la correction apportée sera précise.

Ensuite, on met en oeuvre une étape de détermination 12 d'une vitesse moyenne Vm pour la révolution. A cet effet, on acquiert la durée de la révolution et on en déduit la vitesse angulaire moyenne.

En référence à la figure 2, la courbe 22 représente une succession de vitesses moyennes Vm déterminées pour des révolutions successives du rotor au cours de l'étape d'étalonnage 1.

Ensuite, on met en oeuvre une étape de détermination 13 d'une séquence de valeurs de vitesse instantanée Vi pour chaque instant de la pluralité d'instants t au cours de la révolution, en fonction de la vitesse moyenne Vm et d'une estimation de la décélération du rotor.

En connaissant la décélération du rotor au cours de la révolution, et en considérant que cette décélération s'est effectuée de manière constante au cours de la révolution, ce qui est une approximation suffisante, il est en effet possible de déduire, pour chaque instant d'acquisition t, la vitesse instantanée Vi du rotor, et en tenant compte de la vitesse du rotor au début de la révolution, laquelle correspond sensiblement à la dernière valeur de vitesse instantanée Vi déterminée pour la révolution précédente, où, pour la première révolution libre, la vitesse jusqu'à laquelle le rotor a été entrainé en rotation.

Pour estimer la décélération du rotor, on constitue une séquence de vitesses moyennes Vm du rotor pour les révolutions précédentes et jusqu'à la révolution en cours. Cette séquence de vitesses moyennes Vm est dérivée, par un procédé d'analyse numérique choisi par l'homme du métier, de manière à obtenir une séquence de valeurs de décélération, ou d'accélération négative, puisque le rotor décélère librement.

Ensuite, on met en oeuvre une étape de filtrage 12' de la séquence de valeurs de décélération avec un filtre passe bas, dont la fréquence de coupure est synchronisée sur la fréquence de rotation du rotor, afin de lisser la dérivée des valeurs de décélération de la séquence. Cependant, on veillera à maintenir la fréquence de coupure suffisamment proche de la fréquence de rotation du rotor, afin de ne pas générer un retard trop important pour l'estimation de la décélération.

Une fois l'étape de détermination 13 de la séquence de valeurs de vitesse instantanée Vi effectuée, on met en oeuvre une étape de détermination 14 d'une séquence de valeurs d'angle estimé θₑ du rotor, pour chaque instant d'acquisition t.

Ici, on applique une intégration numérique sur la séquence de valeurs de vitesse instantanée Vi sur 360° de manière à en déduire les valeurs d'angle estimé θₑ. A cet effet l'homme du métier, pourra par exemple utiliser toute méthode connue d'analyse numérique pour obtenir une intégration sur des séquences discrètes.

Ensuite on met en oeuvre une étape de détermination 14' d'une erreur angulaire ε_{θ} correspondant à la différence entre la dernière valeur d'angle estimé θₑ de ladite séquence de valeurs d'angle estimé θₑ par rapport à l'angle de référence θ₀, correspondant à la valeur atteinte lorsque la révolution est terminée.

Autrement dit, on souhaite estimer l'écart angulaire ε_{θ} entre la dernière valeur d'angle estimée qui en théorie doit correspondre sensiblement à l'angle de référence, soit 0° ou 360°.

L'erreur angulaire ε_{θ} déterminée et la durée de ladite révolution permettant ainsi de déterminer une vitesse de correction apte à affiner une séquence suivante de valeurs de vitesse instantanée Vi.

Ainsi, on appliquera une correction aux valeurs d'angle estimé θₑ d'une séquence suivante, en tenant compte de l'erreur angulaire ε_{θ} déterminée.

Dans ce mode de réalisation, si une erreur angulaire ε_{θ} a déjà été déterminée pour une révolution précédente, on corrige à l'étape de détermination 13 de la séquence de valeurs de vitesse instantanée Vi, les valeurs de cette séquence en fonction de l'erreur angulaire ε_{θ} précédemment déterminée et de la durée de la révolution précédente.

Ensuite, on met en oeuvre une étape de détermination 15 d'une cartographie fournissant des valeurs de correction d'angle θ_{c}, en fonction de la différence, pour chaque instant d'acquisition, entre la valeur d'angle mesuré θₘ et la valeur d'angle estimé θₑ.

Autrement dit, la cartographie permet de corriger la valeur d'angle mesuré θₘ, en déterminant, sur la cartographie, la valeur d'angle estimé θₑ qui correspondait au même instant d'acquisition que la valeur d'angle mesurée θₘ à corriger.

En particulier, la cartographie est déterminée après qu'une pluralité de révolutions a été mesurée par le résolveur, par exemple en répétant l'étape d'étalonnage 1 durant une période de temps allant de 5 secondes à 60 secondes.

## Revendications

1. Procédé de correction d'une mesure d'angle d'un rotor dans une machine électrique, obtenue par un capteur d'angle installé dans ladite machine électrique, dans lequel au cours d'une étape d'étalonnage (1) du capteur d'angle, le rotor est entrainé (10) en rotation dans la machine électrique jusqu'à atteindre une vitesse prédéterminée, puis décélère librement dans la machine électrique, et pour chaque révolution du rotor lors de ladite décélération libre :
- on acquiert (11) une pluralité de valeurs d'angle mesuré (θₘ) par ledit capteur d'angle pour une pluralité d'instants (t) au cours de ladite révolution,
- on détermine (12) une valeur représentative de la vitesse moyenne (Vm) du rotor au cours de ladite révolution, en fonction de la durée de ladite révolution,
- on détermine (13) une séquence de valeurs de vitesse instantanée (Vi) pour chaque instant de ladite pluralité d'instants (t) au cours de ladite révolution, en fonction de ladite valeur représentative de la vitesse moyenne (Vm) du rotor et d'une estimation de la décélération du rotor au cours de cette révolution,
- on détermine (14) une séquence de valeurs d'angle estimé (θe) du rotor pour ladite pluralité d'instants (t) au cours de ladite révolution en fonction de ladite séquence de valeurs de vitesse instantanée (Vi),
- on détermine (15) une cartographie fournissant des valeurs de correction d'angle (θ_{c}) en fonction d'un angle mesuré (θₘ) par ledit capteur,
ladite cartographie permettant de corriger une valeur d'angle mesurée (θₘ) par ledit capteur d'angle lors du fonctionnement de la machine électrique, ledit procédé étant **caractérisé en ce que** lesdites valeurs de correction d'angle (θ_{c}) correspondent à la différence entre les valeurs d'angle mesuré (θₘ) et les valeurs d'angle estimé (θₑ) pour un même instant de ladite pluralité d'instants (t), et **en ce qu'**on détermine (14) ladite séquence de valeurs d'angle estimé (θₑ) par intégration de ladite séquence de valeurs de vitesse instantanée (Vi).

2. Procédé selon la revendication 1, **caractérisé en ce que** ladite estimation de la décélération du rotor est sélectionnée dans une séquence de valeurs de décélération obtenue par dérivation d'une séquence de vitesses moyennes (Vm) du rotor.

3. Procédé selon la revendication 2, caractérisé en ce ladite séquence de valeurs de décélération est filtrée (12') par un filtre passe-bas.

4. Procédé selon la revendication 3, **caractérisé en ce que** ledit filtre passe-bas est synchronisé sur la fréquence de rotation dudit rotor.

5. Procédé selon l'une quelconque des revendications 1 à 4, **caractérisé en ce qu'**on détermine une erreur angulaire (ε_{θ}) correspondant à la différence entre la dernière valeur d'angle estimé (θₑ) de ladite séquence de valeurs d'angle estimé (θₑ) par rapport à un angle de référence (θ₀); ladite erreur angulaire (ε_{θ}) et la durée de ladite révolution permettant de déterminer une vitesse de correction apte à affiner une séquence suivante de valeurs de vitesse instantanée (Vi).

6. Procédé selon la revendication 5, **caractérisé en ce qu'**on affine ladite séquence de valeurs de vitesse instantanée (Vi) par une valeur de vitesse de correction déterminée pour une révolution précédente.

7. Organe de correction d'une mesure d'angle d'un rotor dans une machine électrique, **caractérisé en ce qu'**il est adapté pour mettre en oeuvre un procédé selon l'une quelconque des revendications 1 à 6.

8. Ensemble de correction d'un capteur d'angle d'une machine électrique **caractérisé en ce qu'**il comprend une machine électrique sur laquelle est montée un capteur d'angle du rotor, et un organe de correction d'une mesure d'angle selon la revendication 7.

9. Ensemble de correction d'un capteur d'angle selon la revendication 8 dans lequel ledit capteur d'angle comprend un résolveur.

## Patentansprüche

1. Verfahren zur Korrektur einer Winkelmessung eines Rotors in einer elektrischen Maschine, die von einem in die elektrische Maschine eingebauten Winkelsensor erhalten wird, wobei während eines Kalibrierungsschritts (1) des Winkelsensors der Rotor in der elektrischen Maschine drehangetrieben wird (10), bis er eine vorgegebene Geschwindigkeit erreicht, dann in der elektrischen Maschine frei verzögert, und für jede Umdrehung des Rotors bei der freien Verzögerung:
- eine Vielzahl von Messwinkelwerten (θₘ) von dem Winkelsensor für eine Vielzahl von Zeitpunkten (t) während der Umdrehung erfasst wird (11),
- ein für die mittlere Geschwindigkeit (Vm) des Rotors während der Umdrehung repräsentativer Wert in Abhängigkeit von der Dauer der Umdrehung bestimmt wird (12),
- eine Sequenz von Momentangeschwindigkeitswerten (Vi) für jeden Zeitpunkt der Vielzahl von Zeitpunkten (t) während der Umdrehung in Abhängigkeit von dem für die mittlere Geschwindigkeit (Vm) des Rotors repräsentativen Wert und von einer Schätzung der Verzögerung des Rotors während dieser Umdrehung bestimmt wird (13),
- eine Sequenz von Schätzwinkelwerten (θₑ) des Rotors für die Vielzahl von Zeitpunkten (t) während der Umdrehung in Abhängigkeit von der Sequenz von Momentangeschwindigkeitswerten (Vi) bestimmt wird (14),
- ein Mapping bestimmt wird (15), das Winkelkorrekturwerte (θ_{c}) in Abhängigkeit von einem von dem Sensor gemessenen Winkel (θₘ) liefert,
wobei das Mapping es ermöglicht, einen von dem Winkelsensor während des Betriebs der elektrischen Maschine gemessenen Winkelwert (θₘ) zu korrigieren, wobei das Verfahren **dadurch gekennzeichnet ist, dass** die Winkelkorrekturwerte (θ_{c}) der Differenz zwischen den Messwinkelwerten (θₘ) und den Schätzwinkelwerten (θₑ) für denselben Zeitpunkt der Vielzahl von Zeitpunkten (t) entsprechen und dass die Sequenz von Schätzwinkelwerten (θₑ) durch Integration der Sequenz von Momentangeschwindigkeitswerten (Vi) bestimmt wird (14) .

2. Verfahren nach Anspruch 1, **dadurch gekennzeichnet, dass** die Schätzung der Verzögerung des Rotors aus einer Sequenz von Verzögerungswerten gewählt wird, die durch Ableiten einer Sequenz von mittleren Geschwindigkeiten (Vm) des Rotors erhalten wird.

3. Verfahren nach Anspruch 2, **dadurch gekennzeichnet, dass** die Sequenz von Verzögerungswerten von einem Tiefpassfilter (12') gefiltert wird.

4. Verfahren nach Anspruch 3, **dadurch gekennzeichnet, dass** der Tiefpassfilter auf die Rotationsfrequenz des Rotors synchronisiert ist.

5. Verfahren nach einem der Ansprüche 1 bis 4, **dadurch gekennzeichnet, dass** ein Winkelfehler (ε_{θ}) bestimmt wird, der der Differenz zwischen dem letzten Schätzwinkelwert (θₑ) der Sequenz von Schätzwinkelwerten (θₑ) in Bezug auf einen Referenzwinkel (θ₀) entspricht, wobei der Winkelfehler (ε_{θ}) und die Dauer der Umdrehung es ermöglichen, eine Korrekturgeschwindigkeit zu bestimmen, die geeignet ist, eine folgende Sequenz von Momentangeschwindigkeitswerten (Vi) zu verfeinern.

6. Verfahren nach Anspruch 5, **dadurch gekennzeichnet, dass** die Sequenz von Momentangeschwindigkeitswerten (Vi) durch einen Korrekturgeschwindigkeitswert verfeinert wird, der für eine vorausgegangene Umdrehung bestimmt wurde.

7. Element zur Korrektur einer Winkelmessung eines Rotors in einer elektrischen Maschine, **dadurch gekennzeichnet, dass** es dazu geeignet ist, ein Verfahren nach einem der Ansprüche 1 bis 6 umzusetzen.

8. Anordnung zur Korrektur eines Winkelsensors einer elektrischen Maschine, **dadurch gekennzeichnet, dass** sie eine elektrische Maschine, an der ein Winkelsensor des Rotors montiert ist, und ein Element zur Korrektur einer Winkelmessung nach Anspruch 7 umfasst.

9. Anordnung zur Korrektur eines Winkelsensors nach Anspruch 8, wobei der Winkelsensor einen Resolver umfasst.

## Claims

1. Method for correcting a measurement of an angle of a rotor in an electric machine, obtained by an angle sensor installed in said electric machine, wherein, during a step of calibrating (1) the angle sensor, the rotor is driven (10) in rotation in the electric machine until reaching a predetermined speed, and then decelerates freely in the electric machine, and, for each revolution of the rotor during said free deceleration:
- a plurality of measured angle values (θₘ) measured by said angle sensor are acquired (11) for a plurality of instants (t) during said revolution,
- a value representative of the average speed (Vm) of the rotor during said revolution is determined (12) on the basis of the duration of said revolution,
- a sequence of instantaneous speed values (Vi) is determined (13) for each instant of said plurality of instants (t) during said revolution on the basis of said value representative of the average speed (Vm) of the rotor and of an estimation of the deceleration of the rotor during this revolution,
- a sequence of estimated angle values (θₑ) of the rotor is determined (14) for said plurality of instants (t) during said revolution on the basis of said sequence of instantaneous speed values (Vi),
- a map providing angle correction values (θ_{c}) is determined (15) on the basis of a measured angle (θₘ) measured by said sensor,
said map making it possible to correct a measured angle value (θₘ) measured by said angle sensor during operation of the electric machine, said method being **characterized in that** said angle correction values (θ_{c}) correspond to the difference between the measured angle values (θₘ) and the estimated angle values (θₑ) for one and the same instant of said plurality of instants (t), and **in that** said sequence of estimated angle values (θₑ) is determined (14) by integrating said sequence of instantaneous speed values (Vi).

2. Method according to Claim 1, **characterized in that** said estimation of the deceleration of the rotor is selected from a sequence of deceleration values that is obtained by differentiating a sequence of average speeds (Vm) of the rotor.

3. Method according to Claim 2, **characterized in that** said sequence of deceleration values is filtered (12') by a low-pass filter.

4. Method according to Claim 3, **characterized in that** said low-pass filter is synchronized to the rotational frequency of said rotor.

5. Method according to any one of Claims 1 to 4, **characterized in that** an angular error (ε_{θ}) corresponding to the difference between the last estimated angle value (θₑ) of said sequence of estimated angle values (θₑ) with respect to a reference angle (θ₀) is determined; said angular error (ε_{θ}) and the duration of said revolution making it possible to determine a correction speed that is able to refine a following sequence of instantaneous speed values (Vi).

6. Method according to Claim 5, **characterized in that** said sequence of instantaneous speed values (Vi) is refined by a correction speed value determined for a preceding revolution.

7. Unit for correcting a measurement of an angle of a rotor in an electric machine, **characterized in that** it is designed to implement a method according to any one of Claims 1 to 6.

8. Assembly for correcting an angle sensor of an electric machine, **characterized in that** it comprises an electric machine on which an angle sensor for the rotor is mounted, and a unit for correcting a measurement of an angle according to Claim 7.

9. Assembly for correcting an angle sensor according to Claim 8, wherein said angle sensor comprises a resolver.
